Europäisches Patentamt

European Patent Office

Office européen des brevets

(11) Numéro de publication: **0 245 149**
**A1**

## (12) DEMANDE DE BREVET EUROPEEN

(21) Numéro de dépôt: **87400949.1**

(22) Date de dépôt: **24.04.87**

(51) Int. Cl.⁴: **A 01 G 27/00**

(30) Priorité: **25.04.86 FR 8605999**

(43) Date de publication de la demande: **11.11.87**
**Bulletin 87/46**

(84) Etats contractants désignés: **BE CH DE ES GB IT LI NL**

(71) Demandeur: **Gerome, Bruno, 9 Lotissement Le Puech,
F-30650 Rochefort-du-Gard (FR)**

(72) Inventeur: **Gerome, Bruno, 9 Lotissement Le Puech,
F-30650 Rochefort-du-Gard (FR)**

(74) Mandataire: **Bugnon-Hays, Claudine, PATCO
S.A. 39, Boulevard de Carpentras B.P.4,
F-84170 Monteux (FR)**

(54) **Dispositif pour l'alimentation automatique intermittente en eau d'une série de pots ou de bacs à fleurs.**

(57) L'invention concerne un dispositif pour l'alimentation intermittente automatique en eau d'une série de pots à fleurs, caractérisé en ce qu'il comporte un réservoir d'eau supérieur (1) muni dans sa partie inférieure d'une soupape de distribution (7), un réservoir intermédiaire (3) disposé au-dessous du réservoir supérieur (1) avec un bac distributeur (9) monté pivotant autour d'un pivot horizontal et dont l'une des deux extrémités opposées s'étend au-dessous de ladite soupape (7) et l'autre au-dessus d'un orifice d'évacuation (31) prévu dans le fond du réservoir (3), un réservoir inférieur (4) communiquant avec ledit réservoir (3) à travers ledit orifice d'évacuation (31) et qui est relié par une série de tuyaux (5) aux pots (6) à alimenter et des moyens (20) commandant la soupape de distribution (7) disposés dans ledit réservoir intermédiaire (3) et qui commandent la fermeture de ladite soupape (7) lorsque le niveau d'eau dans ledit bac de distribution (9) atteint un niveau prédéterminé et l'ouverture de cette soupape (7) après un temps prédéterminé après l'évacuation de l'eau du bac (9).

## DISPOSITIF POUR L'ALIMENTATION INTERMITTENTE AUTOMATIQUE EN EAU D'UNE SERIE DE POTS OU DE BACS A FLEURS

La présente invention concerne un dispositif pour l'alimentation intermittente automatique en eau d'une série de pots ou de bacs à fleurs.

De tels dispositifs sont connus et en particulier utilisés pour l'arrosage des plantes d'appartement pendant une absence prolongée des occupants du local. Mais les dispositifs connus de ce type présentent l'inconvénient de dépendre pour leur alimentation en eau et/ou leur fonctionnement d'au moins une source d'énergie et notamment d'une source d'eau sous pression et/ou d'une source de courant électrique. Le maintien en fonctionnement de telles sources d'énergie en absence de toute surveillance entraîne des risques d'accidents disproportionnés par rapport au service rendu par un distributeur du type connu.

La présente invention a pour objet de concevoir un dispositif dudit type qui est entièrement autonome et ne nécessite aucune source d'énergie extérieure ni pour son alimentation en eau, ni pour son fonctionnement.

De plus, les dispositifs connus distribuent des quantités d'eau prédéterminées à des intervalles réguliers invariables après un réglage initial. Une telle distribution ne prend pas en considération les variations de température et la teneur en humidité de l'air qui peuvent intervenir au cours d'une période d'utilisation d'un tel distributeur connu.

L'invention a également pour objet de concevoir un dispositif dont le fonctionnement est automatiquement régulé en fonction de ces variations de température et de l'humidité de l'air.

Le dispositif selon la présente invention comporte un réservoir supérieur contenant une réserve d'eau et dans sa partie inférieure une soupape de distribution d'eau, un réservoir intermédiaire disposé au-dessous du réservoir supérieur et dans lequel est disposé un bac distributeur monté pivotant par une partie intermédiaire autour d'un pivot horizontal et dont l'une des deux extrémités opposées s'étend au-dessous de ladite soupape du réservoir supérieur et l'autre au-dessus d'un orifice d'évacuation prévu dans le fond du réservoir intermédiaire, un réservoir inférieur communiquant avec ledit réservoir intermédiaire à travers ledit orifice d'évacuation et qui est relié par une série de tuyaux aux pots ou bacs à fleurs à alimenter et des moyens pour la commande de ladite soupape de distribution d'eau du réservoir supérieur disposés dans ledit réservoir intermédiaire et qui commandent la fermeture de ladite soupape de distribution d'eau lorsque le niveau d'eau dans ledit bac de distribution atteint une ou plusieurs fois un niveau prédéterminé et l'ouverture de cette soupape après un temps prédéterminé après l'évacuation de l'eau du bac de distribution dans le réservoir de distribution inférieur.

Un tel dispositif ne nécessite pour son alimentation en eau et pour son fonctionnement aucune source d'énergie extérieure car la distribution d'eau se fait uniquement sous l'effet de la gravité. Les moyens de commande de la soupape de distribution du réservoir supérieur pouvant contenir un très grand volume d'eau, sont égalementactionnés par l'écoulement même de l'eau à travers le dispositif selon l'invention et par des éléments de rappel également armés, suivant une première variante, par l'écoulement de l'eau.

Suivant le mode de réalisation préféré du dispositif suivant la présente invention, lesdits moyens pour la commande de la soupape de distribution d'eau du réservoir supérieur comprennent une rampe s'étendant parallèlement audit bac distributeur et montée pivotante par son extrémité opposée à ladite soupape autour d'un axe horizontal disposé au voisinage du fond du réservoir intermédiaire, une tige de commande s'étendant entre l'organe mobile de ladite soupape et l'extrémité correspondante de ladite rampe, des moyens de rappel tendant à faire pivoter l'extrémité voisine de la soupape de la rampe vers le haut pour commander l'ouverture de la soupape, un corps en une matière absorbant de l'eau disposé sur ladite rampe et une canalisation de distribution latérale permettant l'écoulement d'eau à partir dudit bac distributeur sur la rampe et le corps lorsque le niveau d'eau dans ce bac atteint un niveau prédéterminé.

Dans une telle structure, le fonctionnement des moyens de commande de la soupape de distribution du réservoir d'eau supérieur est commandé par l'écoulement d'une partie de l'eau distribuée sur le corps absorbant dont l'augmentation de poids ainsi produite commande à un moment donné la fermeture de cette soupape. Ensuite, le séchage naturel du corps absorbant se traduit par une diminution du poids de celui-ci jusqu'à ce que des moyens de rappel commandent à nouveau l'ouverture de la soupape. Ces moyens de rappel peuvent être constitués par un simple contre-poids prévu sur l'extrémité opposée à la soupape de ladite rampe recevant le corps absorbant. Le séchage de ce corps est bien entendu fonction de la température et de la teneur en humidité de l'air et le fonctionnement du dispositif selon l'invention tient ainsi compte de ces deux facteurs variables dans le temps. Par temps chaud et sec, la fréquence des cycles de distribution d'eau augmente ainsi automatiquement.

Suivant un autre mode de réalisation avantageux du dispositif selon l'invention, la face inférieure de ladite rampe porte une bande longitudinale en un métal ferreux destinée à coopérer avec un aimant permanent prévu au fond du réservoir intermédiaire et mobile dans le sens longitudinal de la rampe.

On obtient ainsi un pivotement de la rampe par dépassement d'un point mort et on évite ainsi un blocage éventuel du fonctionnement du dispositif par l'établissement des forces de pivotement exercées par l'eau sur le bac de distribution pivotant et par l'eau et le corps absorbant sur la rampe. Par un déplacement de l'aimant permanent, on peut de plus régler l'intervalle entre deux cycles de distribution successifs.

De préférence, ladite canalisation de distribution latérale est constituée par un tube coudé prévu à l'extrémité opposée à ladite soupape du bac de distribution.

Suivant une variante du dispositif selon l'invention, il comprend un bac intermédiaire disposé dans ledit bac de distribution au-dessous de ladite soupape du réservoir supérieur et qui comprend un trop-plein débouchant dans le bac de distribution et un tube incliné s'étendant dans le sens du pivotement du bac et qui est muni d'une série de tubes de distribution latéraux dont les extrémités libres s'étendent au-dessus de ladite rampe.

Dans ce cas, le dispositif selon l'invention comporte avantageusement entre les extrémités libres desdits tubes de distribution latéraux et ladite rampe, un élément déversoir horizontal mobile dans un sens parallèle au sens longitudinal de la rampe en position basse. On obtient ainsi un moyen de réglage de la quantité d'eau distribuée au cours de chaque cycle de distribution d'eau.

Enfin selon l'invention, la face inférieure dudit bac de distribution comporte à ses extrémités opposées à l'axe de pivotement de ce bac des éléments amortisseurs assurant un fonctionnement souple du bac distributeur.

D'autres réalisations et avantages de l'invention ressortiront de la description qui va suivre et en se référant aux dessins annexés montrant deux modes de réalisation du dispositif suivant la présente invention.

Sur ces dessins :

la figure 1 est une vue en élévation latérale d'un premier mode de réalisation du dispositif selon l'invention en position de repos,

la figure 2 est une vue en plan du dispositif suivant la figure 1,

la figure 3 est une vue en élévation latérale partielle du dispositif représenté à la figure 1 montrant le réservoir pivotant du

0245149

- 4 -

bac inférieur de ce dispositif,

la figure 4 est une vue en élévation latérale partielle du dispositif représenté à la figure 1 montrant l'organe de commande disposé dans le bac inférieur, et

la figure 5 est une vue en plan du réservoir pivotant et de l'organe de commande suivant deux autres modes de réalisation du dispositif selon l'invention.

Le dispositif selon l'invention représenté ici comporte essentiellement trois réservoirs ou bacs superposés et notamment un réservoir supérieur (1) contenant une réserve d'eau (2), un réservoir intermédiaire (3) contenant les moyens de distribution automatiques et un réservoir bas ou inférieur (4) destiné à recevoir l'eau déversée par les moyens de distribution du réservoir intermédiaire (3). A partir du réservoir inférieur (4), l'eau est distribuée par gravité à travers une série de tuyaux souples (5) aux différents pots ou bacs à fleurs (6) à arroser. Les trois réservoirs (1, 3 et 4) sont ouverts à leurs extrémités supérieures permettant une communication entre les réservoirs pour permettre un écoulement intermittent d'eau d'un réservoir à l'autre comme décrit plus en détail ci-après.

Dans le fond du réservoir supérieur (1) est prévu au voisinage de l'une des extrémités longitudinales de ce réservoir (1), un orifice dans lequel est logée une soupape à bille (7) pouvant être actionnée par un pointeau vertical (8) commandé par les moyens de distribution contenus dans le réservoir intermédiaire comme décrit plus loin. En repos, le pointeau (8) s'étend dans sa position inférieure (non représentée ici) dans laquelle la bille de la soupape (7) ferme le passage entre le réservoir supérieur (1) et le réservoir intermédiaire (3).

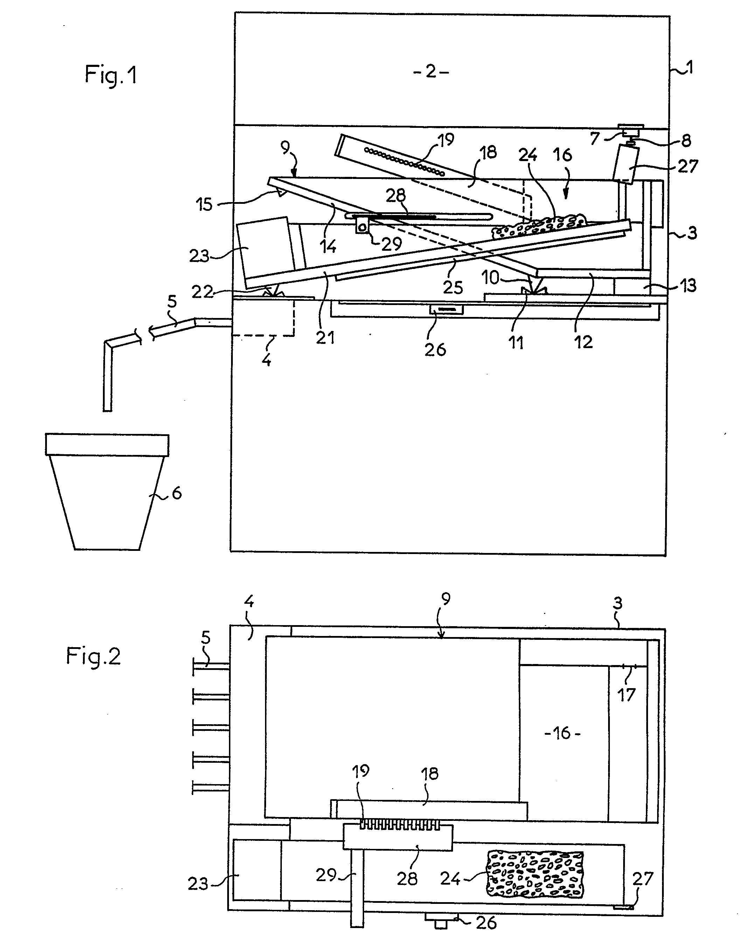

Les moyens de distribution du réservoir intermédiaire (3) comprennent essentiellement un bac distributeur (9) s'étendant sensiblement sur toute la longueur du réservoir (3) et qui est monté par une partie intermédiaire (10) de son fond pivotant autour d'un pivot horizontal transversal (11) prévu sur le fond du réservoir (3) comme représenté clairement à la figure 2.

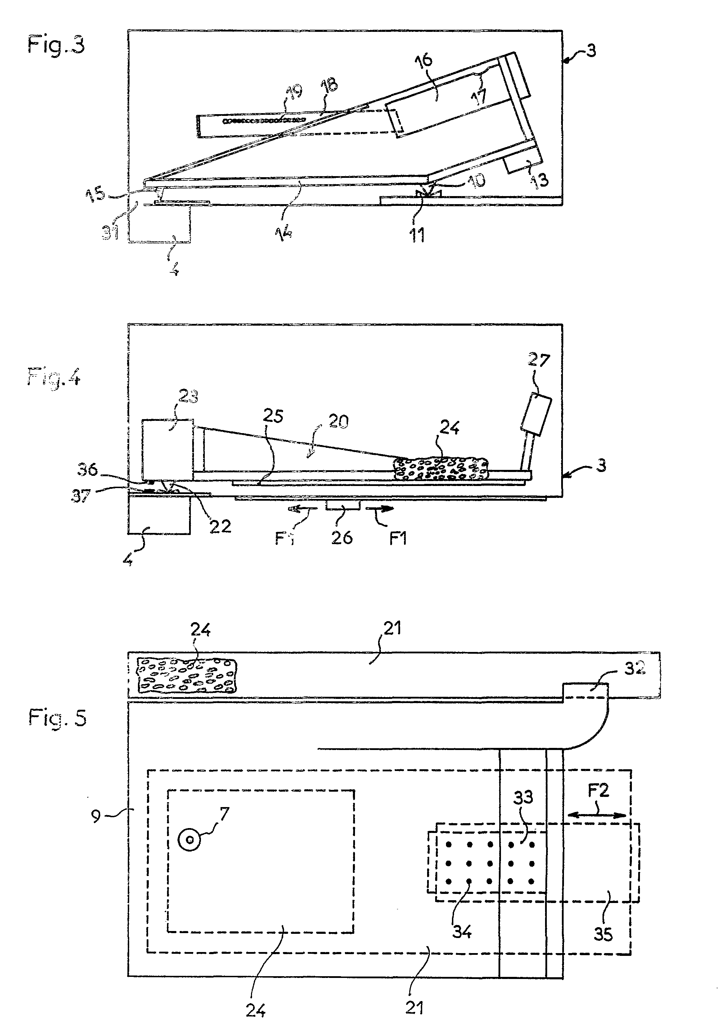

La partie du bac (9) située au-dessous de la soupape (7) du réservoir supérieur (1) présente une plus grande profondeur et un fond plat horizontal (12) par lequel le bac (9) repose, en position de repos représentée aux figures 1 et 2, sur un élément amortisseur (13) prévu au fond du réservoir (3). L'autre partie (14) du fond du bac (9) est inclinée

0245149

- 5 -

vers le haut de sorte que la profondeur du bac diminue en direction de son extrémité opposée à la soupape (7) du réservoir supérieur (1). Au voisinage de cette extrémité, la face inférieure du fond incliné (14) porte également un élément amortisseur (15) destiné à coopérer avec le fond du réservoir intermédiaire (3) lorsque le bac (9) pivote dans sa position de distribution (représentée à la figure 3).

Dans sa partie à fond plat située en regard de la soupape (7) du réservoir supérieur (1), le bac distributeur (9) comporte dans sa partie supérieure, un bac intermédiaire (16) horizontal disposé directement au-dessous de la soupape (7) du réservoir (1). Le bac intermédiaire (16) dont la largeur est plus petite que celle du bac (9) comporte sur au moins l'une de ses parois latérales verticales, une encoche (17) s'étendant à partir du bord supérieur de cette paroi et qui sert d'orifice de déversement de trop-plein.

A l'extrémité opposée à la soupape (7) du réservoir supérieur (1), le bac intermédiaire (16) porte un tube incliné vers le haut (18) muni d'une série de tubes de distribution latéraux (19).

Parallèlement au bac distributeur (9) est disposé dans le réservoir intermédiaire (3) du côté des tubes de distribution latéraux (19) du tube incliné (18), un organe de commande et de temporisation portant la référence générale (20). Cet organe (20) est constitué d'une rampe longitudinale (21) à section en U ouverte vers le haut. Cette rampe (21) est montée pivotante par son extrémité opposée à la soupape (7) du réservoir (1) autour d'un pivot horizontal (22) prévu sur le fond du réservoir intermédiaire (3). Au niveau de ce pivot (22), la rampe (21) porte un contrepoids (23) tendant à faire pivoter la rampe (21) dans sa position active haute représentée à la figure 1. Sur la face supérieure de la rampe (21) repose un corps en une matière absorbant de l'eau (24) qui peut être positionné librement le long de la rampe (21). La face inférieure de la rampe (21) est munie d'une bande (25) d'un métal ferreux disposée en regard d'un aimant permanent (26) prévu sur le fond du réservoir (3) et qui est réglable dans le sens longitudinal de la rampe (21) comme indiqué par la double flèche (F1) (figures 1 à 4).

L'extrémité située au-dessous de la soupape (7) du réservoir (1) de la rampe (21) porte un tige de commande verticale (27) s'étendant vers le haut et destinée à coopérer avec le pointeau (8) de la soupape (7) du réservoir supérieur (1).

Entre les tubes latéraux (19) du tube incliné (18) du bac (16) et la rampe (21) est de plus prévu un élément déversoir (28) sensiblement horizontal et mobile en direction longitudinale. Cet élément (28) peut être réglé à l'aide d'un levier (29) s'étendant à travers une fente (30) pratiquée dans la paroi latérale du réservoir intermédiaire (3) voisine de la rampe (21).

Enfin, comme on le voit à la figure 2, le fond du réservoir intermédiaire (3) présente à son extrémité opposée à la soupape (7) du réservoir (1), une partie ajourée (31) communiquant avec le réservoir de distribution inférieur (4).

Le dispositif selon l'invention décrit ci-dessus fonctionne de la manière suivante :

Au départ, l'élément en matière absorbante (24) est sec et les bacs (9) et (16) ne sont pas remplis d'eau. Par conséquent, le contre-poids (23) ramène l'organe de commande (20) dans sa position supérieure représentée à la figure 1. De même, le bac (9) est amené par son propre poids dans sa position supérieure (figure 1). Dans cette position, la tige (27) repousse le pointeau (8) de la soupape (7) vers le haut et l'eau contenue dans le réservoir supérieur (1) s'écoule à travers la soupape (7) dans le bac intermédiaire (16) et le remplit progressivement.

Lorsque le niveau d'eau dans ce bac (16) atteint le fond des encoches (17), l'eau s'écoule à travers ces encoches dans le bac (9) au fur et à mesure du remplissage du bac distributeur (9).

Lorsque l'eau dans le bac (9) atteint un niveau prédéterminé, le bac (9) pivote autour du pivot (10, 11) et l'eau s'écoule à travers la partie ajourée (31) dans le réservoir (4) et ensuite, à travers les tuyaux (5), dans les pots ou bacs à fleurs (6) à alimenter (figure 3). L'eau monte également dans le tube incliné (18) et s'écoule à travers les tubes latéraux (19) sur l'élément déversoir (28) et de là, sur la rampe (21). Pendant le remplissage du bac distributeur (9), l'élément (24) absorbe ainsi une partie de l'eau s'écoulant sur la rampe (21). Ensuite, le bac (9) retourne dans sa position initiale (figure 1). Lorsque l'élément (24) absorbant l'eau sur la rampe (21) atteint un poids prédéterminé, il fait pivoter la rampe (21) dans sa position basse (figure 4). La tige (27) libère alors le pointeau (8) et la soupape (7) est fermée et empêche tout écoulement d'eau à partir du réservoir supérieur (1) dans les bacs (9, 16) du réservoir intermédiaire (3).

Après un séchage naturel de l'élément absorbant (24) qui dépend de la température et de l'humidité ambiante, la rampe (21) est pivotée par le contre-poids (23) dans sa position de service supérieure (figure 1) et la tige (27) ouvre à nouveau la soupape. Un nouveau cycle d'arrosage est initié.

Le réglage de la position de l'élément déversoir (28) permet de contrôler la quantité d'eau s'écoulant à travers les tubes (19) sur la rampe (21) tandis que le positionnement en direction longitudinale de l'élément absorbant (24) sur la rampe (21) et de l'aimant (26) par rapport à la bande métallique (25) de la rampe (21) permettent d'ajuster le moment de pivotement de la rampe (21) et ainsi l'intervalle entre deux cycles de distribution successifs du dispositif selon l'invention.

La figure 5 montre d'une manière schématique un mode de réalisation plus simple du bac de distribution (9) du réservoir intermédiaire (3). Ici, le bac (9) ne comprend ni bac intermédiaire, ni tube incliné et l'eau s'écoule directement à travers la soupape (7) dans le bac (9). Pour déverser une partie de l'eau s'écoulant dans le bac (9) sur la rampe (21) pour mouiller l'élément absorbant (24), le bac (9) comporte suivant ce mode de réalisation à son extrémité opposée à la soupape (7) une canalisation coudée (32) dont l'extrémité libre débouche au-dessus de la rampe (21) et qui remplace ainsi le tube incliné (18) et les tubes de distribution latéraux (19) prévus dans le mode de réalisation représenté aux figures 1 à 4.

A la figure 5, est représenté en tirets encore un autre mode de réalisation du dispositif selon l'invention. et  notamment des moyens utilisés pour assurer l'écoulement d'une partie de l'eau contenue dans le bac distributeur (9) sur la rampe (21) lorsque le bac (9) pivote dans sa position de distribution. Suivant ce mode de réalisation, lesdits moyens sont constitués par une série de perforations (34) prévues dans la partie opposée à la soupape de distribution d'eau (7) du fond du bac distributeur (9). De plus, dans ce cas, la rampe (21) portant le corps en matière absorbante (24) est disposée directement au-dessous du bac (9) et ainsi au-dessous des perforations (34). Entre la rampe (21) et le fond du bac (9) est prévu au niveau des perforations (34), un élément déversoir (35) monté mobile dans le sens axial de la rampe et du bac dans le sens de la flèche (F2) et qui est incliné vers le bas dans le sens opposé à la soupape (7).

Lorsque le bac (9) s'étend dans sa position de remplissage (figure 1), les perforations (34) sont situées au-dessus du niveau de l'eau dans le bac (9). Par contre, lorsque le bac (9) pivote dans sa position de distribution (figure 3), les perforations (34) se trouvent au-dessous du niveau d'eau et une partie de l'eau s'écoule à travers ces perforations, en partie directement sur la rampe (21) et en partie sur l'élément déversoir (35) et de là, dans le réservoir inférieur (31) et ceci en fonction de la position relative de l'élément (35).

Enfin, pour éviter un blocage accidentel du dispositif selon l'invention dans une position intermédiaire à cause d'un équilibrage des forces exercées sur le bac (9) et la rampe (21), le contre-poids (23) de la rampe comporte sur sa face inférieure un aimant permanent (36) coopérant avec un élément métallique magnétique (37) prévu sur le fond du réservoir (3) comme représenté à la figure 4. Ces éléments (36, 37) assurent comme les éléments (25, 26) décrits ci-dessus, un pivotement de la rampe (21) par dépassement d'un point mort dans un sens et dans l'autre du pivotement de la rampe.

Bien entendu, l'invention n'est pas limitée aux modes de réalisation décrits et représentés ici mais on peut y apporter de nombreuses modifications sans pour cela sortir du cadre de l'invention.

Le réservoir inférieur (31) ne se présente pas forcément sous la forme d'un réservoir séparé comme représenté ici mais il peut simplement être constitué par une partie inférieure du réservoir intermédiaire (3).

REVENDICATIONS

1) Dispositif pour l'alimentation intermittente automatique en eau d'une série de pots ou de bacs à fleurs du type comportant un réservoir supérieur (1) contenant une réserve d'eau (2) et dans sa partie inférieure un orifice de distribution d'eau, un réservoir intermédiaire (3) disposé au-dessous du réservoir supérieur (1) et dans lequel est disposé un bac distributeur (9) monté pivotant par une partie intermédiaire autour d'un pivot horizontal et dont l'une des deux extrémités opposées s'étend au-dessous dudit orifice du réservoir supérieur (1) et l'autre au-dessus d'un orifice d'évacuation (31) prévu dans le fond du réservoir intermédiaire (3), un réservoir inférieur (4) communiquant avec ledit réservoir intermédiaire (3) à travers ledit orifice d'évacuation (31) et qui est relié par une série de tuyaux (5) aux pots ou bacs à fleurs (6) à alimenter, caractérisé en ce qu'il comporte, au niveau dudit orifice du réservoir supérieur (1), une soupape de distribution d'eau (7) et des moyens (20) pour la commande de ladite soupape (7) disposés dans ledit réservoir intermédiaire (3) et qui commandent la fermeture de ladite soupape de distribution d'eau (7) lorsque le niveau d'eau dans ledit bac de distribution (9) atteint une ou plusieurs fois un niveau prédéterminé et l'ouverture de cette soupape (7) après un temps prédéterminé après l'évacuation de l'eau du bac de distribution (9) dans le réservoir de distribution inférieur (4), lesdits moyens (20) pour la commande de la soupape de distribution d'eau (7) du réservoir supérieur (1) comprenant une rampe (21) s'étendant parallèlement audit bac distributeur (9) et montée pivotante par son extrémité opposée à ladite soupape (7) autour d'un axe horizontal (22) disposé au voisinage du fond du réservoir intermédiaire (3), une tige de commande (27) s'étendant entre l'organe mobile (8) de ladite soupape (7) et l'extrémité correspondante de ladite rampe (21), des moyens de rappel (23) tendant à faire pivoter l'extrémité voisine de la soupape (7) de la rampe (21) vers le haut pour commander l'ouverture de la soupape (7), un corps en une matière absorbant de l'eau (24) disposé sur ladite rampe (21) et des moyens de distribution (18, 19, 32) permettant l'écoulement d'eau à partir dudit bac distributeur (9) sur la rampe (21) et sur le corps (24) lorsque le niveau d'eau dans ce bac (9) atteint un niveau prédéterminé.

2) Dispositif suivant la revendication 1, caractérisé en ce que la face inférieure de ladite rampe (21) porte une bande longitudinale (25) en un métal ferreux destinée à coopérer avec un aimant permanent (26) prévu au fond du réservoir intermédiaire (3) et mobile dans le sens longitudinal de la rampe (21).

3) Dispositif suivant l'une quelconque des revendications 1 ou 2, caractérisé en ce que ladite canalisation de distribution (32) est constituée par un tube coudé (32) prévu à l'extrémité opposée à ladite soupape (7) du bac de distribution (9).

4) dispositif suivant l'une quelconque des revendications 1 ou 2, caractérisé en ce qu'il comprend un bac intermédiaire (16) disposé dans ledit bac de distribution (9) au-dessous de ladite soupape (7) du réservoir supérieur (1) et qui comprend un trop-plein (17) débouchant dans le bac de distribution (9) et un tube incliné (18) s'étendant dans le sens du pivotement du bac (9) et qui est muni d'une série de tubes de distribution latéraux (19) dont les extrémités libres s'étendent au-dessus de ladite rampe (21).

5) Dispositif suivant la revendication 4, caractérisé en ce qu'il comporte entre les extrémités libres desdits tubes de distribution latéraux (19) et ladite rampe (21) un élément déversoir horizontal (23) mobile dans un sens parallèle au sens longitudinal de la rampe (21) en position basse.

6) Dispositif suivant l'une quelconque des revendications 1 ou 2, caractérisé en ce que lesdits moyens de distribution sont constitués d'une série de perforations (34) prévues dans le fond du bac distributeur (9) au voisinage de l'extrémité opposée à ladite soupape (7) de ce bac (9), entre le fond dudit bac (9) et la rampe (21) étant prévu, au niveau des perforations (34), un élément déversoir (35) mobile dans le sens longitudinal du bac (9) et de la rampe (21).

7) Dispositif suivant l'une quelconque des revendications 1 à 6, caractérisé en ce que lesdits moyens de rappel (23) de la rampe (21) comportent un aimant permanent (36) destiné à coopérer avec un élément métallique magnétique (37) prévu sur le fond du réservoir intermédiaire (3).

8) Dispositif suivant l'une quelconque des revendications 1 à 7, caractérisé en ce que la face inférieure dudit bac de distribution (9) comporte à ses extrémités opposées à l'axe de pivotement de ce bac, des éléments amortisseurs (13, 15).

Fig.1

Fig.2

0245149

PL2/2

Fig.3

Fig.4

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 157 770 (ROOS)<br>* Colonne 1, ligne 43 - colonne 2, ligne 38; colonne 2, ligne 65 - colonne 3, ligne 47; figures 1-3 *<br><br>--- | 1 | A 01 G 27/00 |
| A | DE-A-2 327 587 (DEUTSCHE SEMPERIT)<br>* Page 3, dernier paragraphe - page 4, paragraphe 1; figure *<br><br>----- | 1 | |

| DOMAINES TECHNIQUES RECHERCHES (Int. Cl.4) |
|---|
| A 01 G |

Le présent rapport de recherche a été établi pour toutes les revendications

| Lieu de la recherche | Date d'achèvement de la recherche | Examinateur |
|---|---|---|
| LA HAYE | 04-08-1987 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82